# EUROPÄISCHE PATENTSCHRIFT

(11) **EP 2 598 311 B1**
(45) Veröffentlichungstag und Bekanntmachung des Hinweises auf die Patenterteilung: **14.10.2015**
(21) Anmeldenummer: 11748912.0
(22) Anmeldetag: 26.07.2011
(51) Int. Cl.: B29C 65/48, B29C 65/08, B29K 101/12, B29K 705/00, C08J 5/12, C09J 5/02, C09J 5/06

(54) **VERFAHREN ZUR HERSTELLUNG EINER STOFFSCHLÜSSIGEN VERBINDUNG ZWISCHEN EINEM WERKSTÜCK MIT EINER METALLOBERFLÄCHE UND EINEM WERKSTÜCK MIT EINER KUNSTSTOFFOBERFLÄCHE, UND BAUTEIL AUS EINEM METALLISCHEN WERKSTÜCK UND EINEM THERMOPLASTISCHEN WERKSTÜCK**
METHOD FOR PRODUCING A COHESIVE BOND BETWEEN A WORKPIECE HAVING A METAL SURFACE AND A WORKPIECE HAVING A PLASTIC SURFACE AND PART MADE OF A METALLIC WORPIECE AND A THERMOPLASTIC WORKPIECE
PROCÉDÉ DE PRODUCTION D'UNE LIAISON COHESIVE ENTRE UNE PIÈCE DONT LA SURFACE EST MÉTALLIQUE ET UNE PIÈCE DONT LA SURFACE EST PLASTIQUE, ET COMPOSANT COMPORTANT UNE PIECE METALLIQUE ET UNE PIECE PLASTIQUE

(30) Priorität: 27.07.2010 DE 102010038470
(43) Veröffentlichungstag der Anmeldung: 05.06.2013
(73) Patentinhaber: Ewald Dörken AG, 58313 Herdecke (DE)
(72) Erfinder: DORNBUSCH, Michael, 40627 Düsseldorf (DE); HINZ, Hans Detlev, 58239 Schwerte (DE)
(74) Vertreter: Kalkoff & Partner
(86) Internationale Anmeldenummer: PCT/EP2011/062790
(87) Internationale Veröffentlichungsnummer: WO 2012/013651

(56) Entgegenhaltungen:
- EP-A1- 0 495 655
- EP-A2- 0 808 883
- DE-A1-102005 056 460
- GB-A- 2 121 355
- JP-A- 58 028 337

## Beschreibung

Die Erfindung betrifft ein Verfahren zum Herstellen einer stoffschlüssigen Verbindung zwischen einem Werkstück mit einer Metalloberfläche und einem Werkstück mit einer Kunststoffoberfläche.

Stoffschlüssige Verbindungen, insbesondere Schweißverbindungen, sind zwischen Werkstücken aus unterschiedlichen Werkstoffen nicht einfach herzustellen. Zum Verbinden von Werkstücken aus Metall und aus Kunststoff oder von Werkstücken mit Oberflächen aus Metall und aus Kunststoff sind Schweißverfahren entwickelt worden, die stoffschlüssige Verbindungen durch Einwirken von Ultraschall herstellen. Zu diesem Zweck wird die Kunststoffoberfläche des Werkstücks mindestens an der Stelle oder Fläche, an der die stoffschlüssige Verbindung hergestellt werden soll (Schmelzfläche) mit einem Überzug aus Metall versehen. Diese Beschichtung aus Metall wird dann unter Einfluss von Ultraschallwellen zum Erweichen oder Schmelzen gebracht, ebenso wie die Oberfläche aus Metall des zu verbindenden Werkstücks. Die Grenzflächen aus Metall verbinden sich miteinander und bleiben auch nach dem Abkühlen miteinander verbunden. Grundlegendes zu solchen Verfahren offenbaren die DE 40 24 941 und die DE 10 2005 005 480.

Ultraschall-Schweißverfahren werden in industriellen, automatisierten Produktionsverfahren eingesetzt.

Das Aufbringen von Metallschichten auf Kunststoffoberflächen ist aufwändig. Es erfordert gesonderte Arbeitsgänge, insbesondere das Auftragen von Beschichtungen oder Überzügen.

Die GB 2 121 355 A offenbart das Aufbringen eines Lackes auf eine Metalloberfläche, wobei der Lack kompatibel mit dem Plastik ist. Die DE 10 2005 056 460 A1 offenbart das Aufbringen einer Haftschicht, die aus zwei aufeinander liegenden Schichten besteht, auf ein Metellbanteil, im Rahmen eines Verfahrens zum herstellen eines Hybridbanteils.

Es ist Aufgabe der Erfindung, ein Verfahren zum Herstellen einer stoffschlüssigen Verbindung zwischen einem Werkstück mit Metalloberfläche und einem Werkstück mit einer Kunststoffoberfläche vorzuschlagen, das einfach und kostengünstig herstellbar ist und bei dem der Korrosionsschutz des metallischen Werkstücks gewährleistet ist.

Zur Lösung dieser Aufgabe wird ein Verfahren zum Herstellen einer stoffschlüssigen Verbindung zwischen Werkstücken gemäß Anspruch 1 vorgeschlagen.

Es hat sich herausgestellt, dass eine mittels Ultraschall hergestellte Verbindung nicht auf dem Verschmelzen von Metallen beruhen muss sondern einfach und preiswert durch das Verschmelzen von Kunststoff bzw. Kunstharz, insbesondere aus thermoplastischem Kunstharz, hergestellt werden kann.

Beschichtungen, die einen Thermoplasten enthalten, können einfach auf Werkstücke aus Metall aufgebracht werden. Werkstücke aus Kunststoff können aus Thermoplasten bestehen, diese enthalten oder ebenfalls auf einfache Weise mit solchen Beschichtungen, die Thermoplasten enthalten oder daraus bestehen, überzogen werden. Werkstücke aus Kunststoff werden im Folgenden deshalb auch als Werkstücke mit thermoplastischer Oberfläche bezeichet.

Die Beschichtung, die einen Thermoplasten enthält, muss mindestens an der Schmelzfläche, also dort aufgebracht werden, wo die stoffschlüssige Verbindung erzeugt werden soll. Sie kann jedoch die gesamte Oberfläche des Werkstücks überziehen. Da zahlreiche Werkstücke ohnehin mit Schutzüberzügen aus Kunstharzen oder Kunststoff versehen werden, kann hier eine an sich vorgesehene Beschichtung, z. B. ein farbiger Lack, genutzt werden, um eine stoffschlüssige Verbindung durch Ultraschall aufzubauen. Das gesonderte Aufbringen eines Überzuges nur als Schmelzfläche für das Verschweißen entfällt dann. Im einfachsten Fall ist also das Werkstück mit der Metalloberfläche mit einer Beschichtung überzogen, die einen Thermoplasten enthält.

Die auf miteinander verschmolzenen thermoplastischen Beschichtungen beruhende, erfindungsgemäße stoffschlüssige Verbindung ist fest genug, um den meisten Anwendungsfällen zu genügen. Insbesondere im Automobilbau, in dem die stoffschlüssigen Verbindungen sehr unterschiedlichen Belastungsfällen ausgesetzt sind, genügt die hier vorgeschlagen Schweißverbindung zahlreichen Anwendungen, beispielsweise der Verbindung von Metall- und Kunststoffbauteilen eines Scheibenwischers.

Gerade die Metallbauteile sind ohnehin regelmäßig gegen Korrosion zu schützen, oft werden sie auch mit farbigen Überzügen verschen; sie werden also lackiert. Ein erfindungsgemäßer Beschichtungsaufbau für ein Werkstück mit einer Oberfläche aus Metall weist eine erste Schicht aus mindestens einem Basecoat und darauf eine zweite Schicht aus mindestens einem Topcoat auf.

Ein Basecoat ist im Wesentlichen aus einem Bindemittel, z. B. einem silanbasierten Bindemittel, und Metallpartikeln, meist aus Zink, Aluminium oder deren Mischungen oder Legierungen, aber auch aus anderen Metallpartikeln zusammengesetzt. Eine typische Zusammensetzung für einen Basecoat offenbart die EP o 808 883. Die Metallpartikel bauen einen kathodischen Korrosionsschutz auf. Der antikorrosive Basecoat wird häufig in zwei Lagen aufgebracht.

Der Topcoat ist im Wesentlichen aus einem ggf. eingefärbten Bindemittel hergestellt. Zum Einfärben des Bindemittels dienen farbige Pigmente, organische und anorganische Farbstoffe, die meist in Mischungen eingesetzt werden. Der Topcoat dient neben der Farbgebung vor allem dem Versiegeln des Basecoats, der aufgrund der darin enthaltenen Metallpartikel und bei der geringen Schichtdicke von z. T. nur 40 µm bis 60 µm oft keine vollständig dichte Schicht bildet.

Das Bindemittel, das zum Herstellen des Basccoats hergestellt wird, weist erfindungsgemäß ein anorganisches Bindemittel auf, also ein Bindemittel ohne Thermoplasten. Typische Bindemittel sind Silikate, Silane, Silanole, aber auch Titanate und/oder Siloxane, jeweils einzeln oder in Mischung. Das Bindemittel des Basecoats kann aber auch organische Bindemittel enthalten, z. B. als Co-Polymere zu anorganischen Bindemitteln.

Das Bindemittel, das zum Herstellen des Topcoats eingesetzt wird, kann bereits Thermoplasten eingesetzt wurde, z. B. um dasselbe Bindemittel, das im Basecoat enthalten ist, kann ein Thermoplast oder eine Mischung von Thermoplasten zugesetzt werden. Der Topcoat kann aber auch unmittelbar als thermoplastische Schicht aufgebracht werden, beispielsweise als Schicht aus Pulverlack, so, wie in der WO 2006/007985 beschrieben.

Der Thermoplast, der im Topcoat enthalten ist, verändert dann -obwohl in der Regel bereits getrocknet oder ausgehärtet- unter Einwirkung von Ultraschallwellen im Bereich der Schmelzfläche seine Eigenschaften, er erweicht und schmilzt ggf. auf. Gleiches gilt für den Thermoplast, der die Oberfläche des Werkstücks aus Kunststoff bildet oder der anteilig darin enthalten ist. Werden in diesem Zustand oder während des Einwirkens der Ultraschallwellen die beiden Werkstück an der Schmelzfläche aneinander gepresst, entsteht eine stoffschlüssige Verbindung durch das Verschmelzen oder Ineinanderfließen der Thermoplasten. Beim Abkühlen verfestigt sich diese thermoplastische Schicht zwischen den beiden zu verbindenden Werkstücken. Diese Verbindung hat auch nach dem Abkühlen Bestand. Im Gegensatz zum Schweißen von Metallen können thermoplastische Schweißverbindungen bei niedrigeren Temperaturen hergestellt werden. Dies erfordert nicht nur weniger Energie, es ermöglicht auch das Verschweißen von temperaturempfindlichen Werkstücken.

Nach einer vorteilhaften Weiterbildung der Erfindung ist der Thermoplast, der in der Oberflächenbeschichtung des metallischen Werkstücks oder in dem Werkstück mit Kunststoffoberfläche enthalten ist, beständig gegen UV-Licht. UV-Licht führt langfristig zu einer Versprödung von Thermoplasten und damit zu einer Schwächung der stoffschlüssigen Verbindung. An sich bekannte Additive (Weichmacher) wirken der Versprödung entgegen. Die erfindungsgemäße stoffschlüssige Verbindung hat damit längeren Bestand, auch wenn die verbundenen Werkstücke oder Bauteile dem Tageslicht ausgesetzt sind.

Kunststoffe, die bereits als Beschichtung auf einem Werkstück ausgehärtet sind oder aus denen eine Werkstück besteht, und die dann wieder aufschmelzen und abkühlen können, um eine stoffschlüssige Verbindung, typischerweise eine Schweißverbindung einzugehen, sind Thermoplasten im Sinne dieser Erfindung. Kunststoffe, die diese Bedingung erfüllen, sind zur Umsetzung des erfindungsgemäßen Verfahrens geeignet. Bevorzugt wird zur Herstellung der Ultraschall-Schweißverbindung ein Thermoplast eingesetzt, der ausgewählt ist aus einer Gruppe, die enthält: Acrylnitril-Butadien-Styrol (ABS), Polyamid (PA), Polylactat (PLA), Polymethylmethacrylat (PMMA), Polycarbonat (PC), Polybutylenterephtalat (PBT), Polyethylenterephthalat (PET), Polyethylen (PE), Polypropylen (PP), Polystyrol (PS), Polyetherketon (PEEK), Polyvinylchlorid (PVC), Polyacrylate (Ester der Acrylsäure) sowie Copolymere von Acrylaten mit Styrol und anderen Vinyl-Monomeren wie bspw. Butadien, Maleinsäure oder Itaconsäure. Es können auch Mischungen von Thermoplasten eingesetzt werden.

Wie vorstehend beschrieben, können Beschichtungen auf Werkstücken mit einer Metalloberfläche oder Werkstücke mit einer Kunststoffoberfläche vollständig aus Thermoplast bestehen. Typischerweise ist dies der Fall, wenn ein Topcoat aus Pulverlack direkt auf das Werkstück mit einer Metalloberfläche bzw. auf einen Basecoat aufgebracht wird, mindestens im Bereich der Schmelzfläche, vorzugsweise aber auf der sichtbaren oder der gesamten Oberfläche des Werkstücks.

Werden aber Topcoats mit einem anderen Bindemittel eingesetzt, dann beträgt der Anteil des Thermoplasten in der Beschichtung des Werkstücks mit einer Oberfläche aus Metall oder in dem Werkstück mit einer Kunststoffoberfläche vorzugsweise zwischen 5 Gewichts-% und 70 Gewichts-& des Beschichtungsmittels. Dieser Anteil genügt, um eine feste und belastbare stoffschlüssige Verbindung bereitzustellen. Gleichzeitig ist dieser Anteil gering genug, um in Beschichtungen integriert zu werden, die an sich auf ein anderes Bindemittel setzen wie beispielsweise ein Basecoat, der mit einem silanbasierten Bindemittel hergestellt wird. Besonders häufig werden Beschichtungen mit einem Thermoplast-Anteil von ca. 30 Gewichts-% bis 50 Gewichts-% eingesetzt.

Das erfindungsgemäße Verfahren kann mit einer Beschichtung mit sehr geringen Schichtdicken umgesetzt werden. Bereits 10 µm Schichtdicke genügen, um eine Schmelzfläche zu erzeugen, die zur Herstellung einer stabilen stoffschlüssigen Verbindung geeignet ist. Die Schichtstärke der Beschichtung an der Schmelzfläche kann auch ohne weiteres stärker sein, beispielsweise bis 70 µm stark. Das gilt insbesondere dann, wenn ein Pulverlack-Topcoat eingesetzt wird. Es können auch stärkere Schichten aufgetragen werden, allerdings ist dann zu prüfen, ob die Beschichtung noch gleichmäßig aufgebracht und ausgehärtet werden kann.

Bevorzugt wird zum Herstellen einer Schweißverbindung eine Beschichtung zwischen 15 µm und 60 µm, vorteilhaft zwischen 20 µm und 50 µm aufgetragen. Die Beschichtung ist hier angegeben als Stärke des Trockenfilms nach dem Aushärten der Beschichtung.

Das Beschichtungsmittel, aus dem die ausgehärtete Beschichtung hergestellt wird, kann flüssig oder pulverförmig aufgetragen werden. Es können auch mehrschichtige Beschichtungen aufgetragen werden, bei denen zunächst ein flüssiges Beschichtungsmittel aufgetragen und ausgehärtet wird und anschließend ein pulverförmiges Beschichtungsmittel darauf aufgetragen und ausgehärtet wird. Wird das Beschichtungsmittel flüssig aufgetragen, dann können Wasser oder Lösungsmittel eingesetzt werden, um das Beschichtungsmittel herzustellen. Bevorzugt wird ein wässriges Beschichtungsmittel, weil dadurch das Risiko des Freisetzens von organischen Komponenten während des anschließenden Aushärtens der Beschichtung minimiert wird. Das Beschichtungsmittel, flüssig oder pulverförmig, wird mindestens auf die Schmelzfläche aufgebracht. Bevorzugt wird die Beschichtung auch über die Schmelzfläche hinaus aufgebracht und überzieht das Werkstück, beispielsweise als Korrosionsschutz oder als farbgebende Beschichtung.

Gegenstand der Erfindung ist weiter ein Bauteil gemäß Auspruch 8.

Details der Erfindung werden nachstehend an Hand von Ausführungsbeispielen näher erläutert.

### Beispiel 1

An einen Träger aus Stahlblech soll eine Aufnahme aus Kunststoff angeschweißt werden. Die Aufnahme aus Kunststoff ist für wechselnde Werkzeuge bestimmt. Sie ist aus Polybutylenterephtalat hergestellt. Die Aufnahme weist an dem mit dem Träger zu verbindenden Ende ein U-Profil auf, das den Träger umgreift. Der Träger ist von quadratischem Querschnitt. Zwischen der Aufnahme auf der Innenfläche des U-Profils und der Außenseite des Trägers ist eine gemeinsame Anlagefläche, die Schmelzfläche, definiert. Diese Schmelzfläche bildet die herzustellende Schweißverbindung.

Auf den Träger aus Stahlblech wird nach einer ersten Ausführung ein Basecoat aufgetragen, um den Träger gegen Korrosion zu schützen. Der Basecoat ist im Wesentlichen zusammengesetzt aus einem handelsüblichen silanbasierten Bindemittel, das Zinklamellen-Partikel enthält, wie z. B. in der EP 0 808 883 offenbart.

Der Basecoat wird in zwei Schichten zu jeweils 15 µm aufgetragen. Das Auftragen erfolgt durch Tauchen des Trägers in flüssigen Basecoat, Abschleudern des Überschusses und Aushärten des Basecoats in einem Trockenofen. Dieser Zyklus wird für jede der beiden Schichten des Basecoats wiederholt. Dieser Basecoat wird in jedem Fall aufgetragen, er ist unverzichtbar für den Schutz des Trägers gegen Korrosion.

Auf den Basecoat wird im Bereich der Schmelzfläche nach der Erfindung, ggf. nach Aufbringen eines Haftvermittlers, ein Topcoat aus Pulverlack aufgetragen, bei dem Polyamid (PA) als thermoplastisches Bindemittel, versetzt mit Farbpigmenten, aufgetragen wird. Das Auftragen eines Pulverlacks ist an sich bekannt; das Lackpulver wird, z. B. mittels elektrostatischer Auftragsverfahren als dünne, gleichmäßige Schicht auf die Oberfläche eines Werkstücks aus Stahlblech aufgetragen, in einem Ofen erwärmt bis zum Verfließen und härtet anschließend beim Abkühlen aus. Die Schichtdicke der Beschichtung aus Basecoat und Topcoat beträgt 70 µm.

Der mit Basecoat und Topcoat beschichtete Träger nach der Erfindung und die Aufnahme werden jeweils in einer Haltevorrichtung so zusammengefügt, so dass beide Werkstücke an der Schmelzfläche unter Druck, aber ohne Verformung aneinanderliegen. Dann wirkt ein an sich bekannter Ultraschallgenerator auf Träger und Aufnahme ein. Das Erwärmen der Schmelzfläche, die beim Träger mit Polyamid beschichtet ist und die bei der Aufnahme aus Polyamid besteht, dauert 5 Sekunden. Dann sind die Schmelzflächen, hier ca. 5 cm² insgesamt auf eine Tiefe von 50 µm erweicht und verfließen ineinander. Der Ultraschallgenerator wird abgeschaltet und der Träger und die Aufnahme bleiben für 30 Minuten in der Haltevorrichtung fixiert, bis sich die erweichte, ineinander verflossene, einen Thermoplasten enthaltene Schicht wieder verfestigt hat.

Nach dem Verfestigen des Thermoplasten sind der Träger und die Aufnahme fest miteinander verbunden. Im Bereich der Schmelzfläche ist der Topcoat, mit dem der Träger überzogen ist, mit dem Werkstoff der Aufnahme stoffschlüssig verbunden. Außerhalb der Schmelzfläche ist der Topcoat unverändert geblieben. Das Herstellen der Ultraschall-Schweißverbindung zwischen Träger und Aufnahme erfordert zur Vorbereitung der zu verbindenden Werkstücke keine weiteren Maßnahmen als die ohnehin erforderliche Beschichtung des Werkstücks aus Metall.

### Beispiel 2

Auf den vorstehend beschriebenen Träger, der mit zwei Schichten des Basecoats beschichtet ist, wird ein flüssiger Topcoat aufgetragen. Der Topcoat weist folgende Zusammensetzung auf:

| | |
|---|---|
| Styrol-Acrylat-Dispersion | 50 Gew.-% |
| Farbstoff | 10 Gew.-% |
| Polysilikat | 7 Gew.-% |
| Lösungsmittel | 5 Gew.-% |
| Stabilisator | bis zu 2 Gew.-% |
| Benetzungshilfe | bis zu 2 Gew.-% |
| Entschäumer | bis zu 2 Gew.-% |
| Schmiermittel | bis zu 2 Gew.-% |
| Rheologiehilfsmittel | bis zu 2 Gew.-% |
| Rest: Wasser | |

Dieser Topcoat kann auch ohne die in Mengen von je bis zu 2 Gew.-% zugesetzten Additive (Stabilisatoren, Benetzungshilfen, Entschäumer, Schmiermittel oder Rheologiehilfsmittel) hergestellt werden. Allerdings können sich dann Lager- oder Verarbeitungseigenschaften ändern, ohne dass der Topcoat dadurch unbrauchbar wird. Gleiches gilt für den Zusatz von Farbstoff. Der Topcoat enthält Polysilikat als anorganisches Bindemittel.

Der Topcoat wird bei einer Temperatur über 30°C getrocknet und ausgehärtet. Das Verbinden des Trägers und der Aufnahme erfolgt wie vorstehend bei Beispiel 1 beschrieben. Es entsteht nach jeder der vorbeschriebenen Ausführungen der Erfindung eine feste Verbindung zwischen Träger aus Metall und Aufnahme aus Kunststoff.

Auch ein solcher Topcoat kann, ggf. unter Zusatz von Farbstoffen oder farbgebenden Pigmenten, unmittelbar, das heißt, ohne vorheriges Beschichten mit einem Basecoat, auf die Oberfläche eines Werkstücks aus Metall aufgebracht werden.

## Patentansprüche

1. Verfahren zum Herstellen einer stoffschlüssigen Verbindung zwischen einem Werkstück mit einer Metalloberfläche und einem Werkstück mit einer Kunststoffoberfläche mit den Schritten
- Bereitstellen eines Werkstücks mit einer Metalloberfläche, das mindestens an einer Schmelzfläche eine Beschichtung aufweist, die einen Thermoplasten enthält, wobei zur Beschichtung der Schmelzfläche ein Beschichtungsmittel für einen Basecoat aufweisend Metallpartikel und ein anorganisches Bindemittel auf die Schmelzfläche aufgetragen wird, auf den ein Beschichtungsmittel für einen Topcoat aufgebracht wird, wobei wenigstens das Beschichtungsmittel für den Topcoat einen Thermoplasten enthält,
- Bereitstellen eines Werkstücks mit einer thermoplastischen Oberfläche,
- Aneinanderlegen von Schmelzfläche des Werkstücks mit Metalloberfläche und Werkstück mit thermoplastischer Oberfläche,
- Verschweißen des Werkstücks mit einer Metalloberfläche und des nichtmetallischen Werkstücks mit thermoplastischer Oberfläche an der Schmelzfläche durch Einwirken von Ultraschall.

2. Verfahren nach einem der vorangehenden Ansprüche, **dadurch gekennzeichnet, dass** der Thermoplast ausgewählt ist aus einer Gruppe, die enthält: Acrylnitril-Butadien-Styrol (ABS), Polyamiden (PA), Polylactat (PLA), Polymethylmethacrylat (PMMA), Polycarbonat (PC), Polybutylenterephtalat (PBT), Polyethylenterephthalat (PET), Polyethylen (PE), Polypropylen (PP), Polystyrol (PS), Polyetherketon (PEEK), Polyvinylchlorid (PVC), Polyacrylate (Ester der Acrylsäure) sowie Copolymere von Acrylaten mit Styrol und anderen Vinyl-Monomeren wie bspw. Butadien, Maleinsäure oder Itaconsäure. Es können auch Mischungen von Thermoplasten eingesetzt werden.

3. Verfahren nach einem der vorangehenden Ansprüche, **dadurch gekennzeichnet, dass** auf die Schmelzfläche ein Beschichtungsmittel aufgetragen wird, das zwischen 5 Gewichts-% und 70 Gewichts-% Thermoplasten bezogen auf das Beschichtungsmittel enthält.

4. Verfahren nach einem der vorangehenden Ansprüche, **dadurch gekennzeichnet, dass** die Beschichtung auf das Werkstück mit der Metalloberfläche in einer Schichtdicke zwischen 10 µm und 70 µm, bevorzugt zwischen 15 µm und 60 µm, besonders bevorzugt zwischen 20 und 50 µm auf die Schmelzfläche aufgebracht wird.

5. Verfahren nach einem der vorangehenden Ansprüche, **dadurch gekennzeichnet, dass** der in der Beschichtung enthaltene Thermoplast UV-beständig ist.

6. Verfahren nach einem der vorangehenden Ansprüche, **dadurch gekennzeichnet, dass** ein Pulverlack, enthaltend einen Thermoplasten, wenigstens an der Schmelzfläche auf das Werkstück mit einer Metalloberfläche aufgetragen wird.

7. Verfahren nach einem der vorangehenden Ansprüche, **dadurch gekennzeichnet, dass** ein wässriges und/oder lösemittelhaltiges Beschichtungsmittel, enthaltend einen Thermoplasten, wenigstens an der Schmelzfläche aufgetragen und anschließend ausgehärtet wird.

8. Bauteil aus einem metallischen Werkstück und einem thermoplastischen Werkstück, hergestellt nach einem Verfahren nach einem der Ansprüche 1-7.

## Claims

1. A method for producing an adhesive connection between a workpiece having a metal surface and a workpiece having a plastic surface with the steps
- providing a workpiece having a metal surface that has a coating, which comprises a thermoplastic, at least at one melt surface, wherein for coating the melt surface, a coating agent for a base coat, comprising metal particles and an inorganic binder, is applied onto the melt surface, a coating agent for a top coat being applied on the base coat, wherein at least the coating agent for the top coat comprises a thermoplastic,
- providing a workpiece having a thermoplastic surface,
- placing the melt surface of the workpiece having the metal surface and the workpiece having the thermoplastic surface against each other,
- welding the workpiece having a metal surface and the non-metallic workpiece having the thermoplastic surface at the melt surface by exposure to ultrasonic.

2. The method according to one of the preceding claims, **characterized in that** the thermoplastic is selected from a group that comprises: acrylonitrile butadiene styrene (ABS), polyamides (PA), polylactide (PLA), polymethyl methacrylate (PMMA), polycarbonate (PC), polybutylene terephtalate (PBT), polyethylene terephthalate (PET), polyethylene (PE), polypropylene (PP), polystyrol (PS), polyetherketone (PEEK), polyvinyl chloride (PVC), Polyacrylate (esters of acrylic acids) and copolymers of acrylates with styrene and other vinyl monomers such as butadiene , maleic acids or itaconic acids. Mixtures of thermoplastic can also be used.

3. The method according to one of the preceding claims, **characterized in that** a coating agent is applied onto the melt surface that comprises between 5% by weight and 70% by weight thermoplastic with respect to the coating agent.

4. The method according to one of the preceding claims, **characterized in that** the coating is applied onto the workpiece having the metal surface on the melt surface in a layer thickness between 10 µm and 70 µm, preferably between 15 µm and 60 µm, particularly preferably between 20 µm and 50 µm.

5. The method according to one of the preceding claims, **characterized in that** the thermoplastic comprised in the coating is UV resistant.

6. The method according to one of the preceding claims, **characterized in that** a powder lacquer, comprising a thermoplastic, is applied at least at the melt surface on the workpiece having a metal surface.

7. The method according to one of the preceding claims, **characterized in that** an aqueous and/or solvent-containing coating agent, comprising a thermoplastic, is applied at least at the melt surface and subsequently hardened.

8. A component composed of a metal workpiece and a thermoplastic workpiece, produced according to a method according to one of the claims 1 - 7.

## Revendications

1. Procédé de production d'une liaison cohésive entre une pièce dont la surface est métallique et une pièce dont la surface est plastique, avec les étapes suivantes :
- fourniture d'une pièce dont la surface est métallique qui présente au moins sur une surface fusible un revêtement qui contient une matière thermoplastique, dans lequel, pour le revêtement de la surface fusible, un agent de revêtement pour une basecoat qui présente des particules métalliques et un liant anorganique est appliqué sur la surface fusible, sur laquelle basecoat un revêtement pour une topcoat est mis en place, au moins l'agent de revêtement pour la topcoat contenant une matière thermoplastique,
- fourniture d'une pièce dont la surface est thermoplastique,
- juxtaposition de la surface fusible de la pièce dont la surface est métallique et de la pièce dont la surface est thermoplastique,
- soudage de la pièce dont la surface est métallique et de la pièce non-métallique dont la surface est thermoplastique sur la surface fusible par l'action d'ultrasons.

2. Procédé selon l'une des revendications précédentes, **caractérisé en ce que** la matière thermoplastique est sélectionnée dans un groupe qui contient : acrylonitrilebutadiène-styrène (ABS), polyamides (PA), polylactate (PLA), polyméthylméthacrylate (PMMA), polycarbonate (PC), téréphtalate de polybutylène (PBT), téréphtalate de polyéthylène (PET), polyéthylène (PE), polypropylène (PP), polystyrène (PS), polyéther cétone (PEEK), polychlorure de vinyle (PVC), polyacrylates (ester d'acide acrylique) ainsi que copolymères d'acrylates avec du styrène et d'autres monomères de vinyle comme par ex. le butadiène, l'acide malique ou l'acide itaconique. Des mélanges de matière thermoplastique peuvent également être utilisés.

3. Procédé selon l'une des revendications précédentes, **caractérisé en ce que**, sur la surface fusible, il est appliqué un agent de revêtement qui contient entre 5 %-poids et 70 %-poids de matière thermoplastique, rapportés à l'agent de revêtement.

4. Procédé selon l'une des revendications précédentes, **caractérisé en ce que** le revêtement est appliqué sur la pièce dont la surface est métallique à raison d'une épaisseur de couche entre 10 µm et 70 µm, de préférence entre 15 µm et 60 um, de façon particulièrement préférée entre 20 et 50 µm sur la surface fusible.

5. Procédé selon l'une des revendications précédentes, **caractérisé en ce que** la matière thermoplastique contenue dans le revêtement est résistante aux UV.

6. Procédé selon l'une des revendications précédentes, **caractérisé en ce qu'**un revêtement en poudre, contenant une matière thermoplastique, au moins sur la surface fusible, est appliquée sur la pièce dont la surface est métallique.

7. Procédé selon l'une des revendications précédentes, **caractérisé en ce qu'**un agent de revêtement aqueux et/ou contenant des solvants, contenant une matière thermoplastique, est appliqué au moins sur la surface fusible, et puis durci.

8. Composant composé d'une pièce métallique et d'une pièce thermoplastique, fabriqué selon un procédé selon une des revendications 1-7.
